# EUROPEAN PATENT SPECIFICATION

(11) **EP 1 321 646 B1**
(45) Date of publication and mention of the grant of the patent: **01.08.2007**
(21) Application number: 01850218.7
(22) Date of filing: 21.12.2001
(51) Int. Cl.: F02B 67/04, F02B 75/20, F02B 63/04, B60K 5/04

(54) **Internal combustion engine**
Brennkraftmaschine
Moteur à combustion interne

(43) Date of publication of application: 25.06.2003
(73) Proprietor: Ford Global Technologies, LLC, Dearborn, MI 48126 (US)
(72) Inventor: Tonnqvist, Andreas, 436 40 Askim (SE); Sällström, Göran, 290 60 Kyrkhult (SE); Zarowiecki, Andrzej, 423 47 Torslanda (SE); Murman, Bengt, 184 63 Äkersberg (SE)
(74) Representative: Hellbom, Lars Olof

(56) References cited:
- EP-A- 1 038 719
- CH-A- 170 540
- DE-A- 19 939 813
- FR-A- 1 211 391
- US-A- 5 873 336
- PATENT ABSTRACTS OF JAPAN vol. 013, no. 593 (M-914), 27 December 1989 (1989-12-27) & JP 01 249922 A (YAMAHA MOTOR CO LTD), 5 October 1989 (1989-10-05)

## Description

Internal combustion engine, comprising an engine block, a crankshaft rotatably journalled in the engine block and a transmission mounted at one side of the engine block, said transmission having an input shaft with an input gear wheel meshing with an output gear wheel driven by the crankshaft and a first output shaft driven by the input shaft for driving at least one auxiliary unit.

Usually in common internal combustion engines auxiliary units such as water pumps, generators, pumps for power steerings and compressors for air conditionings are driven by the crankshaft via pulleys or gear wheels mounted on an end portion of the crankshaft extending outside of the crankcase. The same goes for engine components such as camshafts and fuel pumps which often are driven via a toothed pulley and belt at the front end of the engine block. These auxiliary units and transmission means at the front end of the engine increase the total length of the engine and require space in the engine compartment. Basically this is not a problem in vehicles having longitudinally mounted engines but when it comes to transversally mounted engines available space is more limited and transversally mounted engines having more than four cylinders, e. g. six cylinders, are usually V-engines.

It is known in the art to reduce the space requirements of an in line engine, e. g. a six cylinder in line engine, by arranging a transmission for auxiliary units at one side of the engine. For instance, DE 2 153 773 discloses a six cylinder in line engine having a side mounted transmission with a single output shaft drivingly connected to a fuel injection pump and an air compressor. The generator is in a conventional manner mounted at a high level at one side of the engine block near the front end and is driven by means of a separate pulley and belt transmission in front of the front end of the engine block. A starter motor is mounted at a low level at the same side and near the rear end of the engine block.

A principal object of the present invention is to achieve an internal combustion engine of the type described by way of introduction which can be optimized with respect to a compact and crash safe design.

More specifically an object of the invention is to achieve an internal combustion engine described by way of introduction which has a compact transmission being able to transmit torque between the engine crankshaft and an integrated starter/generator, a so-called ISG, with a first ratio when the ISG is running as a starter and a ratio different from the first ratio when the ISG is running as a generator.

These and further objects are achieved according to the invention by virtue of the fact that said auxiliary unit is arranged relative to the engine block so that an upper portion thereof extends above an upper end plane of the engine block.

In a preferred embodiment of the present invention said auxiliary unit is an integrated starter/generator which is drivingly connected to the engine crankshaft via a two-speed transmission. Such an auxiliary unit is a rather heavy component and by mounting it so that an upper portion thereof extends above an upper plane of the engine block its center of gravity will be located above the center of gravity of the engine block. The geometrical relations between the engine block and high mounted ISG together with the weight of the ISG will, in a frontal collision, force the power train to rotate downwards during its backward movement, thereby forcing the power train to move under rather than into the passenger compartment.

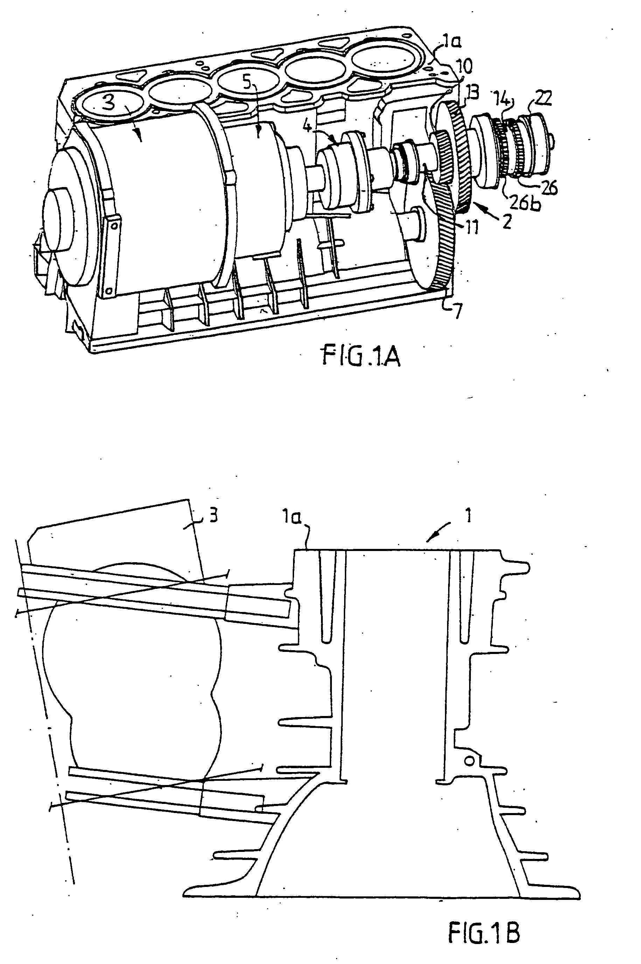

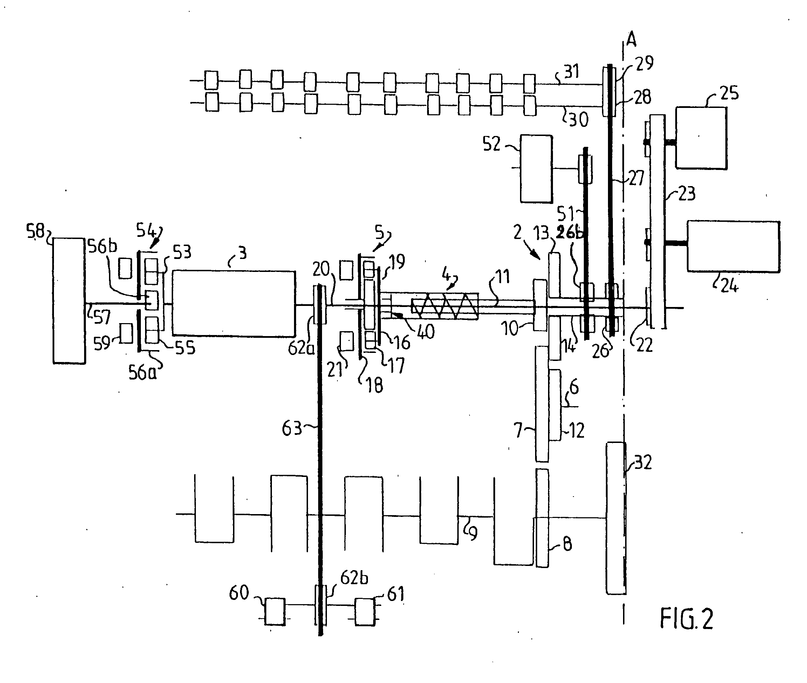

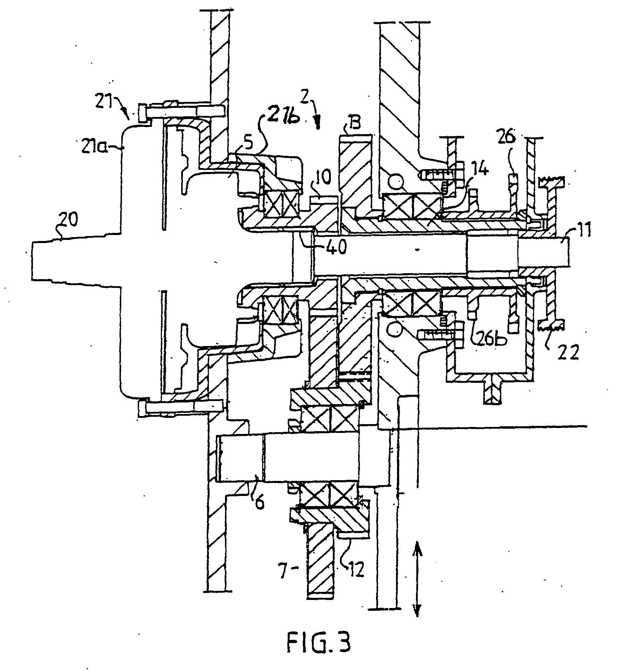

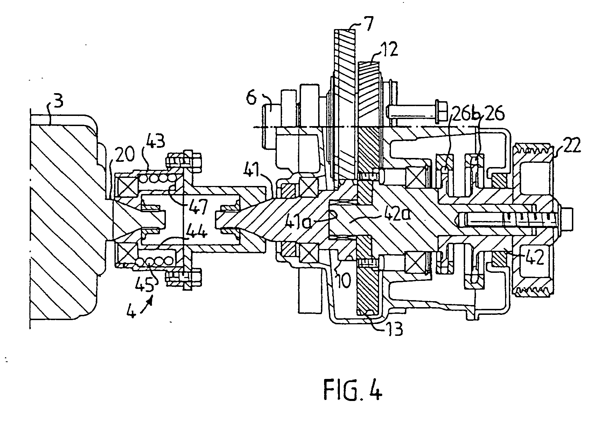

The invention will be described in more detail below with reference to the accompanying drawings, where Figs. 1a and 1b show a perspective view and a schematic cross-section, respectively, of an engine block with an auxiliary unit and drive transmission according to the invention, Fig. 2 shows a scheme of the auxiliary drive transmission in Fig. 1a, Fig. 3 shows a cross-section of a first embodiment of the transmission according to the invention and Fig. 4 shows a cross-section of a second embodiment of the transmission according to the invention.

Figs. 1a and 1b show an engine block 1 of a five cylinder in line engine having a transmission 2 which is drivingly connected to an auxiliary unit in the form of an integrated starter/generator (ISG) 3 through a pulse damping coupling 4 and a gearbox 5, preferably a well known planetary type two speed gearbox. As can be seen in fig. 1a and 1b the ISG 3 is mounted at a high level relative to the engine block 1 so that the upper end portion 3a of the ISG 3 will, for crash safety purposes, be located at a level high above the upper end surface 1a of the engine block 1. Transversally mounted engines are usually mounted leaning slightly rearward towards the passenger compartment. By mounting the ISG 3 rather high the position and the weight of the ISG 3 will assist in a crash sequence to force the power train to rotate downwards during its backward movement, thereby forcing the power train to move under rather than into the passenger compartment.

With reference to fig. 2 the transmission 2 comprises an input shaft 6 on which a first gear wheel 7 is non-rotatably mounted. The gear wheel 7 meshes with an output gear wheel 8 non-rotatably mounted on a crankshaft 9 rotatably journalled in the engine block 1. The gear wheel 7 also meshes with a first output gear wheel 10 journalled on a first output shaft 11 of the transmission 2, the gear wheel 10 having a smaller radius than the gear wheel 8. The gear wheel 7 transmits torque from the crankshaft 9 to the first output shaft 11 via the pulse damping coupling 4 and a one-way clutch 40 (to be described in more detail with reference to Fig. 3) at an rpm higher than the rpm of the crankshaft. A second gear wheel 12 having a smaller radius than the gear wheel 7 is non-rotatably mounted on the input shaft 6 and meshes with a second output gear wheel 13 non-rotatably mounted on a second hollow output shaft 14 rotatably journalled on the outside of and concentrically with the first output shaft 11. This second output gear has a larger radius than the gear wheel 12. Due to the difference in gear ratio between the pairs of gears wheels 7, 10 and 12, 13, respectively, the first output shaft 11 will rotate with a higher rpm than the second output shaft 14.

As shown in fig. 2 the gear wheel 10 is non-rotatably connected to an input side of the pulse damping coupling 4 which will be described in more detail with reference to fig. 4.

The output side of the pulse damping coupling 4 in turn is non-rotatably connected to a planet carrier 16 with planet gears 17 meshing with a ring gear 18 and a sun gear 19 non-rotatably attached to an end of an output/input shaft 20 of the ISG 3. By means of a clutch 21 which can be an electromagnetic one the ring gear 18 can be locked to the clutch housing 21a or released as will be described with reference to fig. 3. A pulley 22 is non-rotatably attached to an opposite end portion of the first output shaft 11. Via the pulley 22 and a belt 23 the first output shaft 11 drives an air conditioning compressor 24 and a water pump 25..

The output/input shaft 20 runs through the ISG 3 and carries, on the side opposite the planetary gearbox 5, non-rotatably a planet carrier 53 of a second planetary gearbox 54, the planet gears 55 of which mesh with a ring gear 56a and a sun gear 56b, which is non-rotatably attached to an input shaft 57 of a compressor (super charger) 58. By means of this arrangement the ISG 3 can be used to drive the compressor 58 at low engine rpm to boost intake air pressure. The ISG 3 is drivingly connected to and disconnected from the compressor by means of an electromagnetic clutch 59. The arrangement shown in Fig. 2 also includes an engine oil pump 60 and an engine transmission oil pump 61 which are mounted on the outside of the engine block and are drivingly connected to the output/input shaft 20 via pulleys 61, 62 and a belt 63.

On the second output shaft 14 two chain sprockets 26 and 26b are non-rotatably mounted. Via the chain sprocket 26, a chain 27 and two additional chain sprockets 28 and 29 the second output shaft 14 drives two camshafts 30, 31. Via a pulley 50 the second output shaft drives a fuel injection pump 52. As can be seen in fig. 2 the chain transmission 26-29 is located in the same plane A-A of the engine block 1 as a fly wheel 32 mounted on the crankshaft 9. The flywheel 32 is mounted at that end of the the engine block against which the engine clutch and transmission (not shown) is intended to be mounted. This means that the pulley 22, the belt 23, the compressor 24 and the water pump 25 will be situated outside the end plane A-A of the engine block 1 but above the gearbox so that these auxiliary units will add no extra length to the total length of the engine including the engine clutch and transmission.

The transmission 2 described above and shown schematically in fig. 2 is shown in more detail in fig. 3 where elements common with elements in fig. 2 have the same reference numerals as in fig. 2.. The first output shaft 11 of the transmission 2 and the output shaft 20 from the ISG are joined so as to rotate together with the same speed. Preferably a pulse damping coupling (not shown) corresponding with the pulse damping coupling 4 shown in fig. 2 and fig. 4 is arranged in the drive line between the ISG 3 and the clutch 21. The output shaft 11 is journalled in the gear wheel 10 which in turn is journalled in a gear casing 21b. Via the above mentioned one-way clutch 40 the gear wheel 10 can be connected to the output shaft 11. When starting the engine by running the ISG 3 as a motor the ring gear 18 will be locked by the clutch 21 to the clutch housing 21 a. The sun gear 19 will then drive the planet carrier 16 and with it the gear wheel 10 at a lower speed than the input speed of the shaft 11/20 to increase torque during starting.. Thus, the one-way clutch 40 is arranged such that it will be free wheeling when the gear wheel 10 is running with a lower rpm than the shaft 11 . A typical ratio between the input speed to and the output speed from the planetary gearing, i. e. the speed of the shaft 11/20 vs. the speed of the planet carrier 16, might be 3:1

After the engine has started the motor mode of the ISG can be switched to generator mode at which time the ring gear 18 will be released by disengaging the friction clutch 21. As soon as the rpm of the gear wheel 10 exceeds the speed of the shaft 11 the one-way clutch will lock the gear wheel 10 to the shaft 11, thereby transmitting torque from the engine to the ISG which is now running as a generator.

The described planetary gearing and one-way clutch arrangement allows the air conditioning compressor 24 to be driven by the ISG when the engine of the vehicle is turned off since, when the gear wheel 10 is stationary and the shaft 11 is driven by the ISG, the one-way clutch will be free-wheeling, thereby allowing the shaft 11 to rotate in relation to the gear wheel 10 in order to drive the compressor 24.

Other means instead of a friction clutch 21, a planetary gearing 5 and a one-way clutch 40 could be used in order to achieve the above described function, i.e. a speed reduction when running the ISG as a starter, a direct drive when driving the ISG as a generator from the engine of the vehicle and, finally, the possibility to disengage the output gear wheel 10 from the shaft 11 to drive an auxiliary unit such as an air conditioning compressor directly from the ISG when the engine is not running. The planetary type gearbox could be replaced with a regular two-speed gearbox having a direct drive and a pair of low speed gear wheels, one if which is engageable and disengageable. The one-way clutch could be replaced with another type of engageable and disengageable clutch.

Fig. 4 shows an embodiment of the invention which is slightly modified in comparision with the one shown in fig. 3. Like the transmission 2 in fig. 3 the transmission 2 in fig. 4 has two output shafts with a common axis of rotation, namely a first output shaft 41 and a second output shaft 42. As can be seen the shafts 41 and 42 are journalled end to end instead of one inside the other like the first and second output shafts of the transmission shown in fig. 3. In particular the first shaft 41 is formed with a bore 41 a receiving a stub portion 42a of the second shaft 42. The first output shaft 41 is connected to the shaft 20 of the ISG by means of a pulse damping coupling 4 which comprises an outer cup like member 43 and an inner cup like member 44. In a space formed between the members 43 and 44 a coil spring 45 is disposed, which has one end attached to the outer member 43 and the other end attached to a flange 47 on the inner member 44. The spring 45 is arranged such that, in a direction of rotation of the coupling 4 which results in a contraction of the spring 45, some relative movement between the member 43 and 44 will be allowed. Rotation in the opposite direction will result in an expansion of the spring 45 which will tend to prevent relative movement between the members 43 and 44 when the coils of the spring are biassed against the inner surface of the outer cup like member 43.

A major difference between the arrangement shown in fig. 3 and the one shown in fig. 4 is that the pulley 22 for the air conditioning compressor belt 23 is non-rotatably mounted on the second output shaft 14. This arrangement will not allow driving of the compressor from an ISG when the engine of the vehicle is not running and, therefore, it is suitable for an installation having a generator instead of an ISG.

## Claims

1. Internal combustion engine, comprising an engine block (1), a crankshaft (9) rotatably journalled in the engine block and a transmission (2) mounted at one side of the engine block, said transmission having an input shaft (6) with an input gear wheel (7) meshing with an output gear wheel (8) driven by the the crankshaft and a first output shaft (11;41) driven by the input shaft for driving at least one auxiliary unit (3), **characterized in that** said auxiliary unit (3) is arranged relative to the engine block (2) so that an upper portion thereof extends above an upper end plane (1a) of the engine block.

2. Internal combustion engine according to claim 1, **characterized in that** said auxiliary unit (3) is an integrated starter/generator which is drivingly connected to said first output shaft via a two-speed gearbox.

3. Internal combustion engine according to claim 2, **characterized in that** said transmission has a second output shaft (14;42), said first and second output shafts having a common axis of rotation and being driven with different speeds of rotation.

4. Internal combustion engine according to claim 3, **characterized in that** the second output shaft (14) is hollow, that the first output shaft (11) extends through the second output shaft and that at least a second auxiliary unit (24,25) is drivingly connected to an end portion of the first output shaft facing away from the integrated starter/generator (3).

5. Internal combustion engine according to claim 4, **characterized in that** said second auxiliary unit is an air conditioning compressor (24).

6. Internal combustion engine according to one of claims 3-5, **characterized in that** said second output shaft (14;42) is drivingly connected to at least one camshaft (31,32).

7. Internal combustion engine according to one of claims 2-6, **characterized in that** said first output shaft (11) is drivingly connected to the two-speed gearbox (3) via a pulse damping coupling (4).

8. Internal combustion engine according to one of claims 2-7, **characterized in that** said first output shaft (11) is drivingly connected to the two-speed gearbox (3) via an engageable and disengageable one-way coupling (40).

9. Internal combustion engine according to one of claims 4-8, **characterized in that** the transmission (2) is arranged at one side of the engine block (1) so that said secondary unit (24) extends above and past that end plane of the engine block against which the engine gearbox is intended to be mounted.

## Patentansprüche

1. Verbrennungsmotor, der einen Motorblock (1), ein Kurbelwelle (9), die drehbar in dem Motorblock gelagert ist, und ein Getriebe (2) umfasst, das an einer Seite des Motorblocks angebracht ist, wobei das Getriebe eine Eingangswelle (6) mit einem Eingangszahnrad (7) aufweist, das mit einem Ausgangszahnrad (8) in Eingriff ist, das von der Kurbelwelle angetrieben wird, und die erste Ausgangswelle (11; 41) durch die Eingangswelle angetrieben wird, um wenigstens eine Zusatzeinheit (3) anzutreiben,
**dadurch gekennzeichnet,**
**dass** die Zusatzeinheit (3) relativ zu dem Motorblock (2) so angeordnet ist, dass sich ein oberer Abschnitt derselben oberhalb einer oberen Abschlussebene (1 a) des Motorblocks erstreckt.

2. Verbrennungsmotor nach Anspruch 1, **dadurch gekennzeichnet, dass** die Zusatzeinheit (3) eine Starter-Generator-Einheit ist, die über ein Zweiganggetriebe antreibend mit der ersten Ausgangswelle verbunden ist.

3. Verbrennungsmotor nach Anspruch 2, **dadurch gekennzeichnet, dass** das Getriebe eine zweite Ausgangswelle (14; 42) aufweist, wobei die erste und die zweite Ausgangswelle eine gemeinsame Drehachse haben und mit unterschiedlichen Drehgeschwindigkeiten angetrieben werden.

4. Verbrennungsmotor nach Anspruch 3, **dadurch gekennzeichnet, dass** die zweite Ausgangswelle (14) hohl ist, dass sich die erste Ausgangswelle (11) durch die zweite Ausgangswelle hindurcherstreckt und dass wenigstens eine zweite Zusatzeinheit (24, 25) antreibend mit einem ersten Endabschnitt der ersten Ausgangswelle verbunden ist, der von der Starter-Generator-Einheit (3) weggewandt ist.

5. Verbrennungsmotor nach Anspruch 4, **dadurch gekennzeichnet, dass** die zweite Zusatzeinheit ein Klimaanlagenkompressor (24) ist.

6. Verbrennungsmotor nach einem der Ansprüche 3-5, **dadurch gekennzeichnet, dass** die zweite Ausgangswelle (14; 42) antreibend mit wenigstens einer Nockenwelle (31, 32) verbunden ist.

7. Verbrennungsmotor nach einem der Ansprüche 2-6, **dadurch gekennzeichnet, dass** die erste Ausgangswelle (11) über ein lmpulsdämpfungskupplung (4) antreibend mit dem Zweiganggetriebe (3) verbunden ist.

8. Verbrennungsmotor nach einem der Ansprüche 2-7, **dadurch gekennzeichnet, dass** die erste Ausgangswelle (11) über eine einrückbare und eine ausrückbare Einwegkupplung (40) antreibend mit dem Zweiganggetriebe verbunden ist.

9. Verbrennungsmotor nach einem der Ansprüche 4-8, **dadurch gekennzeichnet, dass** das Getriebe (2) an einer Seite des Motorblocks (1) so angeordnet ist, dass sich die Sekundäreinheit (24) oberhalb und jenseits der Abschlussebene des Motorblocks erstreckt, an der das Motor-Getriebe angebracht werden soll.

## Revendications

1. Un moteur à combustion interne, comportant un bloc moteur (1), un vilebrequin (9) rotativement tourillonné dans le bloc moteur et une transmission (2) montée sur un côté du bloc moteur, ladite transmission ayant un arbre d'entrée (6) avec une roue dentée d'entrée (7) s'engrenant avec une roue dentée de sortie (8) entraînée par le vilebrequin et un premier arbre de sortie (11;41) entraîné par l'arbre d'entrée pour l'entraînement d'au moins un organe auxiliaire (3), **caractérisé en ce que** ledit organe auxiliaire (3) est agencé par rapport au bloc moteur (2) afin qu'en une portion supérieure il se prolonge au-dessus d'un plan d'extrémité supérieure (la) du bloc moteur.

2. Un moteur à combustion interne selon la revendication 1, **caractérisé en ce que** ledit organe auxiliaire (3) est un démarreur/générateur intégré qui est raccordé par entraînement audit premier arbre de sortie via une boîte à deux vitesses.

3. Un moteur à combustion interne selon la revendication 2, **caractérisé en ce que** ladite transmission présente un deuxième arbre de sortie (14;42), lesdits premier et deuxième arbres de sortie ayant un axe commun de rotation et étant entraînés avec des vitesses différentes de rotation.

4. Un moteur à combustion interne selon la revendication 3, **caractérisé en ce que** le deuxième arbre de sortie (14) est creux, **en ce que** le premier arbre de sortie (11) se prolonge à travers le deuxième arbre de sortie et **en ce qu'**au moins un deuxième organe auxiliaire (24;25) est raccordé par entraînement à une portion d'extrémité du premier arbre de sortie orienté à l'opposé du démarreur/générateur intégré (3).

5. Un moteur à combustion interne selon la revendication 4 **caractérisé en ce que** ledit deuxième organe auxiliaire est un compresseur de climatisation (24).

6. Un moteur à combustion interne selon l'une quelconque des revendications 3-5, **caractérisé en ce que** ledit deuxième arbre de sortie (14;42) est raccordé par entraînement à au moins un arbre à cames (31,32).

7. Un moteur à combustion interne selon l'une quelconque des revendications 2-6, **caractérisé en ce que** ledit premier arbre de sortie (11) est raccordé par entraînement à la boîte à deux vitesses (3) via un accouplement amortisseur d'impulsions (4).

8. Un moteur à combustion interne selon l'une quelconque des revendications 2-7, **caractérisé en ce que** le premier arbre de sortie (11) est raccordé par entraînement à la boîte à deux vitesses (3) via un accouplement unidirectionnel embrayable et débrayable (40).

9. Un moteur à combustion interne selon l'une quelconque des revendications 4-8, **caractérisé en ce que** la transmission (2) est agencée sur un côté du bloc moteur (1) afin que ledit deuxième organe auxiliaire (24) se prolonge au-dessus et au-delà de ce plan d'extrémité du bloc moteur contre lequel la boîte de vitesses du moteur est conçue pour être montée.
